# EUROPÄISCHE PATENTANMELDUNG

(11) **EP 0 865 148 A1**
(43) Veröffentlichungstag der Anmeldung: **16.09.1998**
(21) Anmeldenummer: 98102465.6
(22) Anmeldetag: 13.02.1998
(51) Int. Cl.: H02K 23/66, H02K 5/22, H02K 5/15

(54) **Kommutatormotor mit Motorbetriebssensor**

(30) Priorität: 12.03.1997 DE 19710014
(71) Anmelder: ROBERT BOSCH GMBH, 70442 Stuttgart (DE)
(72) Erfinder: Weber, Matthias, 76534 Baden-Baden (DE); Moskob, Frank, 77815 Buehl (DE); Dreier, Friedrich-Wilhelm, 76547 Sinzheim (DE)

(57) **Zusammenfassung**

Es wird ein Kommutatormotor (10) vorgeschlagen, der vorzugsweise in einer Motor-Getriebe-Antriebseinheit zum Verstellen von Ausstattungsteilen von Kraftfahrzeugen angeordnet ist. Der Kommutatormotor weist einen Bürstenhalter (20) auf, an dem ein Lagerschild (40) mit einem Ankerwellenlager (42) und ein Motorbetriebssensor (56) angeordnet sind.

## Beschreibung

### Stand der Technik

Die Erfindung geht aus von einem Kommutatormotor nach dem Oberbegriff des Hauptanspruchs. Aus der Druckschrift DE-OS 43 26 391 ist bereits ein Kommutatormotor mit einem Lagerschild bekannt, in dem in einer Ausnehmung in axialer Richtung eine Leiterplatte als Elektronikplatine angeordnet ist. Die Elektronikplatine ist vollständig im Motorgehäuse untergebracht. Sie ist mit einer Steuerelektronik und einem Motorbetriebssensor bestückt, der zusammen mit einem auf der Ankerwelle angeordneten Ringmagneten die Bestimmung der Drehzahl des Motors erlaubt. Über Durchführungen im Motorgehäuse sind Stromversorgungs- und Steuerleitungen der Elektronikplatine nach außen geführt. Ein Bürstenhalter des Kommutatormotors ist als separates Bauteil im Motorgehäuse angeordnet. Bei dieser Anordnung bedingen die Einzelteile zum einen einen erheblichen Montageaufwand und müssen zum anderen in engen Toleranzen gefertigt und zueinander positioniert werden, um eine einwandfreie Funktion zu gewährleisten.

### Vorteile der Erfindung

Der erfindungsgemäße Kommutatormotor mit den kennzeichnenden Merkmalen des Hauptanspruchs hat den Vorteil, daß das Anordnen des Lagerschildes für ein Ankerwellenlager und des Betriebssensors an dem Bürstenhalter eine kostengünstige Vormontage der beiden Bauteile an dem Bürstenhalter gestattet, der dann als Baueinheit beim Zusammenbau in das Motorgehäuse eingesetzt werden kann. Der Montageaufwand beim Zusammenbau des Kommutatormotors ist dadurch deutlich verringert. Umgekehrt kann der Kommutatormotor leicht demontiert werden, falls eine Reparatur erforderlich ist. Durch die feste Anordnung des Motorbetriebssensors relativ zum Ankerwellenlager und damit zur Ankerwelle selbst sowie dem daran angeordneten Ringmagneten ist die Wahrscheinlichkeit für eine Fehlorientierung des Sensors, die zu einer Verminderung der Sensorgenauigkeit oder im Extremfall zum Schleifen des Sensors an der Ankerwelle führen kann, erheblich reduziert.

Bevorzugt findet der erfindungsgemäße Kommutatormotor Anwendung in Stellantrieben zum Verstellen von Ausstattungsteilen in Kraftfahrzeugen, wo Bauvolumen- und Gewichtsersparnis sowie Zuverlässigkeit des Motors und die Möglichkeit seiner kostengünstige Fertigung herausragende Rollen spielen. Beispielsweise kann der Kommutatormotor in Stellantrieben für Fensterscheiben, Schiebedächer, Autositze usw. eingesetzt werden.

Vorteilhafte Weiterbildungen des erfindungsgemäßen Kommutatormotors ergeben sich aus den abhängigen Ansprüchen.

Eine vorteilhafte Weiterbildung der Erfindung sieht vor, daß das Lagerschild der Ankerwelle auf den Bürstenhalter aufsteckbar und beispielsweise durch Rasthaken fixierbar ist. Dadurch kann das Lagerschild separat gefertigt, aber vor dem Zusammenbau des Motors an dem Bürstenhalter spielfrei befestigt werden. Durch diese Maßnahme bleibt die kompakte Bauweise des Motors erhalten, während die Fertigung des Bürstenhalters vereinfacht wird.

Besonders günstig ist die Anordnung der Elektronikplatine an dem Bürstenhalter, da durch diese Maßnahme weitere zusätzliche Befestigungsvorrichtungen oder -elemente für die Elektronikplatine entfallen können. Ragt die Elektronikplatine aus dem Motorgehäuse heraus, werden keine gesonderten Durchführungen für die Anschlüsse der Platine in dem Motorgehäuse benötigt.

Durch die vorteilhafte einstückige Anformung eines Elektronikgehäuses an den Bürstenhalter wird der Motor nochmals kompakter, so daß er sehr kleine Abmessungen aufweisen kann. Es werden Bauraum, Montageaufwand und Fertigungskosten eingespart.

Der Motorbetriebssensor kann in einfacher Weise auf der Elektronikplatine angeordnet sein, beispielsweise indem er mit seinen Anschlüssen in der Elektronikplatine eingelötet ist. Damit kann die Platine vorbestückt in den Bürstenhalter eingesetzt und als Ganzes bei einem Ausfall der Steuerelektronik ausgetauscht werden, ohne daß ein Ausbau des Bürstenhalters notwendig ist. Der Motorbetriebssensor kann dazu zumindest in geringem Maße beweglich auf der Elektronikplatine angeordnet und vom Bürstenhalter aufgenommen und in seiner Lage fixiert sein.

Die vorgeschlagene gemeinsame Anordnung von Motorbetriebssensor und Ankerwellenlager am Bürstenhalter wirkt sich besonders günstig bei der Verwendung eines Hallsensors als Motorbetriebssensor aus, der mit einem an der Ankerwelle angeordneten Ringmagneten zusammenwirkt. Durch die definierte Lage des Hallsensors zum Ringmagneten, die sich aus der Anordnung des Ankerwellenlagers am Bürstenhalter ergibt, kann der Hallsensor einen geringeren Abstand zum Magnetrad als in den vorbekannten Anordnungen haben. Dadurch verringert sich die zum sicheren Betrieb des Hallsensors erforderliche Feldstärke des Ringmagneten, das somit mit entsprechend kleineren und leichteren Permanentmagneten ausgestattet werden kann. Neben einer Gewichtsersparnis ergibt sich eine Erhöhung der Funktionssicherheit aufgrund der exakteren Positionierung durch kurze Toleranzketten.

Weitere vorteilhafte Weiterbildungen und Ausgestaltungen der erfindungsgemäßen Vorrichtung ergeben sich jeweils aus den weiteren Unteransprüchen und der folgenden Beschreibung.

### Zeichnung

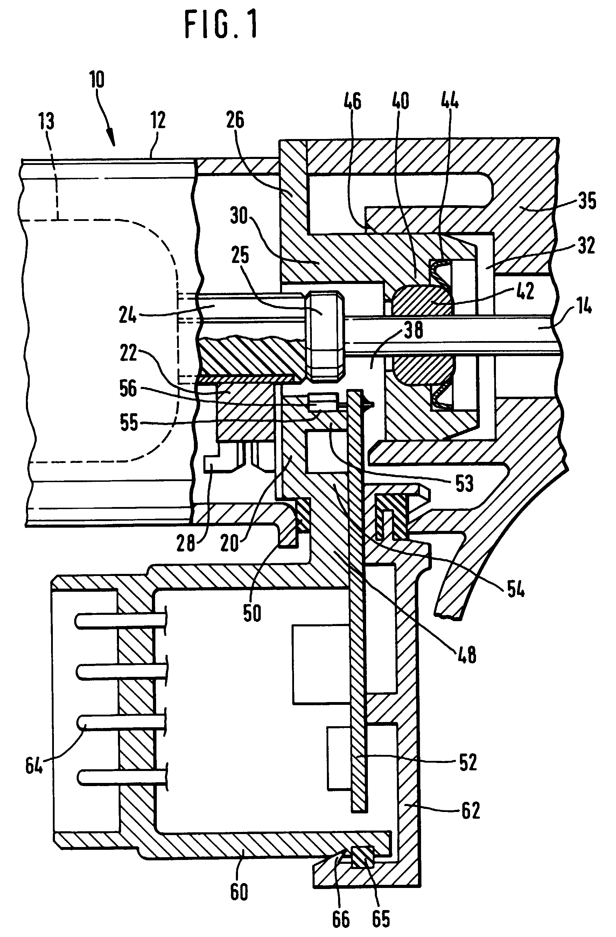

Die Erfindung ist zusammen mit weiteren vorteilhaften Ausgestaltungen in Ausführungsbeispielen in den Zeichnungen dargestellt und in der nachfolgenden Beschreibung näher erläutert. Dabei zeigen die Figur 1 einen Ausschnitt eines Kommutatormotors teilweise geschnitten, Figur 2 einen Ausschnitt eines Bürstenhalters einer anderen Ausführungsform eines erfindungsgemäßen Kommutatormotors, Figur 3 eine alternative Ausgestaltung eines Deckels eines Elektronikgehäuses des Kommutatormotors und Figur 4 eine Ausgestaltung für die Anordnung einer Elektronikplatine.

### Beschreibung des Ausführungsbeispiels

Der gezeigte Kommutatormotor 10 dient als Antrieb in einer Kommutatormotor-Getriebe-Antriebseinheit dem Verstellen nicht näher dargestellter Ausstattungsteile in Kraftfahrzeugen. Ein im wesentlichen topfförmiges Motorgehäuse 12 enthält einen Motoranker 13 mit einer aus dem Motorgehäuse verlängerten Ankerwelle 14.

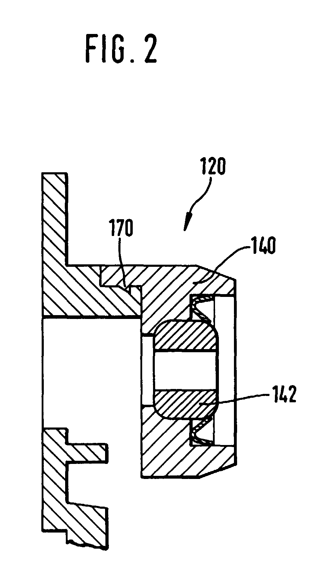

Über an einem Bürstenhalter 20 angeordnete Kohlebürsten 22, die einem Kommutator 24 auf der Ankerwelle 14 zugeordnet sind, werden die Ankerwicklungen des Motors mit Strom versorgt. Auf der Ankerwelle 14 ist axial neben dem Kommutator 24 ein Ringmagnet 25 angeordnet. Der aus Kunststoff gespritzte Bürstenhalter 20 besteht aus einer Grundplatte 26, die von der Ankerwelle 14 und dem Kommutator 24 durchstoßen wird und die Halter 28 für die Kohlebürsten 22 aufweist, sowie einem im wesentlichen zylindrischen Kragen 30, der in eine Ausnehmung 32 eines dem Motor nachgeordneten Gehäusebauteils 35 eingepaßt ist. Der Kragen 30 des Bürstenhalters 20 weist eine zweite Ausnehmung 38 auf, in die die Ankerwelle 14 mit dem Kommutator 24 und dem Magnetrad 25 berührungsfrei ragt. Auf seiner vom Kommutator 24 abgewandten Stirnseite ist ein Lagerschild 40 mit einem Kalottenlager 42 einstückig angeformt. Eine alternative Ausgestaltung des Bürstenhalters zeigt die Figur 2. Dort ist ein ein Kalottenlager 142 aufnehmendes Lagerschild 140 auf einen Bürstenhalter 120 aufsteckbar ausgebildet und mittels Rasthaken 170 gegen axiale Verschiebung oder radiale Verdrehung relativ zum Bürstenhalter 120 gesichert.

In dem Kalottenlager 42 des Lagerschildes 40 ist die Ankerwelle 14 gelagert. Das Kalottenlager 42 ist durch eine plastisch verformte Federscheibe 44 in dem Lagerschild 40 verklemmt. Denkbar ist auch die Verwendung andersartiger Lagermittel anstelle des Kalottenlagers.

Das Lagerschild 40 des Kragens 30 ist zur Erleichterung des Einführens in die Ausnehmung 32 des Gehäuseteils 35 bei der Montage kegelstumpfförmig ausgebildet, wie auch die Wand der Ausnehmung 32 an ihrer dem Kommutator zugewandten Stirnseite 46 innen abgeschrägt ist.

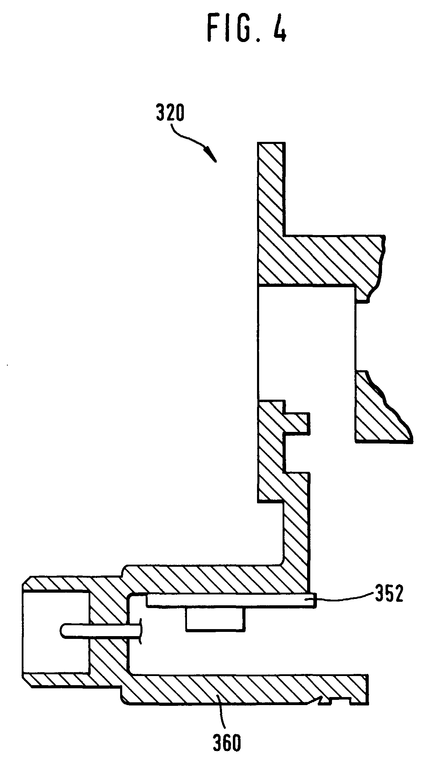

Ein Ansatz 48 an dem Bürstenhalter 20 ragt in radialer Richtung zwischen dem Motorgehäuse 12 und dem Gehäusebauteil 35 gegen das Motorgehäuse 12 durch Dichtmittel 50 abgedichtet aus dem Kommutatormotor 10 über das Motorgehäuse 12 hinaus. Eine Elektronikplatine 52 mit Motorleistungs- und Steuerelektronik ist im dargestellten Ausführungsbeispiel an Stegen 53, 54 an dem Ansatz 48 abgestützt und erstreckt sich in radialer Richtung. In einer anderen Ausgestaltung, die in der Figur 4 dargestellt ist, kann sich die Elektronikplatine 352 auch in axialer Richtung, also parallel zur Motordrehachse, erstrecken. Auch in diesem Fall befindet sie sich in einem an dem Bürstenhalter 320 angeformten Elektronikgehäuse 360.

An dem Steg 53 ist wenigstens ein Einschub 55 ausgebildet, in den ein Hallsensor als Motorbetriebssensor 56 eingesetzt ist. Die Abmessungen des Einschubs 55 sind an die Größe des Motorbetriebssensors 56 angepaßt. Durch die Aufnahme des Motorbetriebssensors 56 in dem Einschub 55 ist seine laterale Position festgelegt. Durch einen nicht dargestellten elastisch auslenkbaren Rasthaken ist der Motorbetriebssensor 56 auch in Richtung der Ankerwellendrehachse fixiert.

Der Hallsensor als Motorbetriebssensor 56 arbeitet mit dem an der Ankerwelle 14 angeordneten Ringmagneten 25 zur Erfassung der Motordrehzahl zusammen. Bei Drehung der Ankerwelle 14 ändert sich das Magnetfeld am Ort des Motorbetriebssensor 56, da der Ringmagnet 25 an seinem äußeren Umfang abwechselnd in Nord- und Südrichtung magnetisiert ist. Die Magnetisierungsrichtung wird in digitale Signale umgewandelt und von der Steuerelektronik auf der Elektronikplatine 52 ausgewertet. Im Ausführungsbeispiel sind in umfänglicher Richtung um die Ankerwelle 14 herum zwei Hallsensoren in einem Winkel von 90° versetzt angeordnet, die zusätzlich zur Bestimmung der Motordrehzahl auch die Erfassung der Drehrichtung der Ankerwelle 14 erlauben.

Die Anschlüsse des Motorbetriebssensors 56 sind auf der Elektronikplatine 52 eingelötet. Die Lage der Elektronikplatine 52 auf dem Bürstenhalter 20 ist dann durch die Anordnung des Motorbetriebssensors 56 in dem Einschub 55 bestimmt. Deshalb ist die Elektronikplatine 52 mit spielbehafteten Bohrungen versehen, durch die sie mit im Durchmesser kleineren Schrauben an dem Bürstenhalter 20 fixiert werden kann.

An den sich radial nach außen erstreckenden Ansatz 48 des Bürstenhalters 20 ist weiterhin ein Elektronikgehäuse 60 einstückig angeformt, das den Kommutatormotor 10 zusammen mit einem Deckel 62 allseitig abschließt und die Elektronikplatine 52 aufnimmt und Mittel 64 für den Anschluß von Steuer- und Stromversorgungsleitungen aufweist. Der Deckel 62 bildet ein separates Bauteil, das gegen das dem Motorgehäuse 12 nachgeordnete Gehäusebauteil 35 abgedichtet ist. Er ist am Elektronikgehäuse 60 mittels Rasthaken 66 fixiert. Die beiden Bauteile sind entlang ihrer Verbindungslinie mit einem Dichtmittel 65 nach außen abgedichtet.

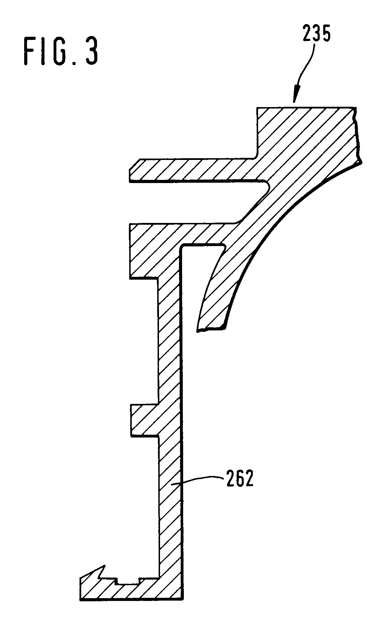

Eine alternative Anordnung des Deckels des Elektronikgehäuses ist in der Figur 3 dargestellt. Der Deckel 262 ist bei dieser Ausführungsform einstückig an das dem Motorgehäuse nachgeordneten Gehäusebauteil 235 angeformt und somit Teil des Gehäusebauteils 235.

## Patentansprüche

1. Kommutatormotor, vorzugsweise in einer Motor-Getriebe-Antriebseinheit zum Verstellen von Ausstattungsteilen von Kraftfahrzeugen angeordnet, mit einem Bürstenhalter (20) und einem kommutatorseitigen Lagerschild (40) mit Ankerwellenlager (42) sowie wenigstens einem Motorbetriebssensor (56), dadurch gekennzeichnet, daß das Lagerschild (40) und der Motorbetriebssensor (56) an dem Bürstenhalter (20) angeordnet sind.

2. Kommutatormotor nach Anspruch 1, dadurch gekennzeichnet, daß das Lagerschild (140) auf den Bürstenhalter (120) aufsteckbar ist.

3. Kommutatormotor nach Anspruch 1, dadurch gekennzeichnet, daß das Lagerschild (40) einstückig mit dem Bürstenhalter (20) verbunden ist.

4. Kommutatormotor nach einem der vorhergehenden Ansprüche, dadurch gekennzeichnet, daß der Bürstenhalter (20) Träger für eine Elektronikplatine (52) ist.

5. Kommutatormotor nach Anspruch 4, dadurch gekennzeichnet, daß sich die Elektronikplatine (352) im wesentlichen in radialer Richtung erstreckt.

6. Kommutatormotor nach Anspruch 4, dadurch gekennzeichnet, daß die Elektronikplatine (52) in axialer Richtung an dem Bürstenhalter (20) angeordnet ist.

7. Kommutatormotor nach einem der Ansprüche 5 oder 6, dadurch gekennzeichnet, daß sich zumindest ein Teil der Elektronikplatine (52) außerhalb eines den Motor umgebenden Motorgehäuses (12) befindet.

8. Kommutatormotor nach einem der vorhergehenden Ansprüche, dadurch gekennzeichnet, daß ein Elektronikgehäuse (60) mit dem Bürstenhalter (20) verbunden ist.

9. Kommutatormotor nach Anspruch 8, dadurch gekennzeichnet, daß das Elektronikgehäuse (60) an den Bürstenhalter (20) einstückig angeformt ist.

10. Kommutatormotor nach einem der Ansprüche 8 oder 9, dadurch gekennzeichnet, daß ein Deckel (62) das Elektronikgehäuse (60) und das Motorgehäuse (12) nach außen verschließt.

11. Kommutatormotor nach Anspruch 10, dadurch gekennzeichnet, daß der Deckel (262) Teil eines dem Kommutatormotor (10) stirnseitig nachgeordneten Gehäusebauteils (235) ist.

12. Kommutatormotor nach einem der Ansprüche 4 bis 11, dadurch gekennzeichnet, daß der Motorbetriebsensor (56) auf der Elektronikplatine (52) angeordnet und vom Bürstenhalter (20) aufgenommen ist.

13. Kommutatormotor nach einem der vorhergehenden Ansprüche, gekennzeichnet durch einen, Hallsensor als Motorbetriebssensor (56), der mit einem an der Ankerwelle (14) angeordneten Ringmagnet (25) zusammenwirkt.
